# EUROPEAN PATENT SPECIFICATION

(11) **EP 0 598 609 B1**
(45) Date of publication and mention of the grant of the patent: **23.04.1997**
(21) Application number: 93309180.3
(22) Date of filing: 17.11.1993
(51) Int. Cl.: C08F 4/647, C08F 4/646, C08F 4/645, C08F 10/00

(54) **Catalyst for olefin polymerization and process for olefin polymerization using the same**
Katalysator für Olefinpolymerisation und Verfahren für Olefinpolymerisation unter Anwendung desselben
Catalyseur de polymérisation d'oléfines et procédé de polymérisation d'oléfines l'utilisant

(30) Priority: 18.11.1992 JP 309087/92; 03.12.1992 JP 324510/92
(43) Date of publication of application: 25.05.1994
(73) Proprietor: MITSUI PETROCHEMICAL INDUSTRIES, LTD., Tokyo 100 (JP)
(72) Inventor: Tashiro, Takashi, c/o Mitsui Petrochemical, Kuga-gun, Yamaguchi 740 (JP); Ueda, Takashi, c/o Mitsui Petrochemical, Kuga-gun, Yamaguchi 740 (JP)
(74) Representative: Cresswell, Thomas Anthony

(56) References cited:
- EP-A- 0 374 619
- EP-A- 0 416 928
- EP-A- 0 427 697
- EP-A- 0 436 328
- EP-A- 0 439 964
- EP-A- 0 478 913
- EP-A- 0 511 665
- EP-A- 0 576 213
- US-A- 5 032 562

## Description

The present invention relates to an olefin polymerization catalyst and a process for olefin polymerization. More particularly, the invention relates to a Ziegler catalyst for olefin polymerization which contains no organoaluminium oxy-compound and to a process for olefin polymerization using the catalyst.

Known in the prior art are a titanium-type catalyst comprising a titanium compound and an organoaluminium compound and a vanadium-type catalyst comprising a vanadium compound and an organoaluminium compound, for use in the production of an olefin (co)polymer, including ethylene homopolymer and ethylene/α-olefin copolymers.

Further, a Ziegler catalyst for olefin polymerization comprising a zirconium compound and an organoaluminium oxy-compound (aluminoxane) is also known as a catalyst which can be used for producing an olefin (co)polymer with a high polymerization activity. A process for preparing an ethylene/α-olefin copolymer using such catalyst is proposed in, for example, Japanese Patent Laid-Open Publications No. 19309/1983, No. 35005/1985, No. 35006/1985, No. 35007/1985 and No. 35008/1985. Moreover, a process for polymerizing an olefin using a catalyst formed from a mixture of a zirconium compound and an organoaluminium compound consisting of aluminoxane and an organoaluminium compound is proposed in Japanese Patent Laid-Open Publications No. 260602/1985 and No. 130604/1985.

Using a catalyst comprising the zirconium compound and the organoaluminium oxy-compound, olefins can be polymerized with a high polymerization activity. However, there is a problem in the case of using the organoaluminium oxy-compound. This compound is generally prepared by reacting an organoaluminium compound with water. This reaction process is complicated, and hence this compound is expensive and, therefore, the cost for preparing an olefin (co)polymer also becomes high.

On this account, there is now eagerly desired an olefin polymerization catalyst which comprises a zirconium compound and an organometallic compound other than the organoaluminium oxy-compound and which not only has excellent olefin polymerization activity but also excellent economic efficiency. Further, the advent of a process for polymerizing an olefin using such a catalyst is also desired.

A catalyst for olefin polymerization comprising a transition metal compound, a Lewis acid and an organoaluminium compound is proposed in Japanese Patent Laid-Open Publication No. 179005/1991.

EP-A-511,665 discloses a catalyst which consists essentially of a product obtained by contacting (A) a metallocene-type transition metal compound, (B) a clay, clay mineral, ion exchanging layered compound, diatomaceous earth, silicate or zeolite, and (C) an organic aluminium compound.

EP-A-478,913 discloses an ionic polymerization catalyst including a bis(cyclopentadienyl) compound of a Group IVB metal and a stabilising anion comprising a plurality of boron atoms.

EP-A-416,928 discloses a catalyst comprising a solid carrier, and, on its surface, monocyclopentadienyl titanium trichloride, a magnesium compound and an electron donor.

EP-A-436,328 discloses a catalyst comprising (a) a titanium compound free of a ligand consisting of hydrocarbon residues, (b) a titanium, zirconium or hafnium compound having a cyclopentadiene ligand, and (c) an organic aluminium compound.

The present invention provides an olefin polymerization catalyst comprising:
(A) a compound of a transition metal in Group IVB of the periodic table, which contains a ligand having a cyclopentadienyl skeleton;
(B) an organoaluminium compound; and
(C) a solid Broensted acid selected from a cation-exchange resin and a heteropolyacid.

The present invention also provides a process for olefin polymerization comprising polymerizing an olefin in the presence of an olefin polymerization catalyst as defined above.

The olefin polymerization catalyst and the process for olefin polymerization according to the invention have excellent olefin polymerization activity and excellent economic efficiency.

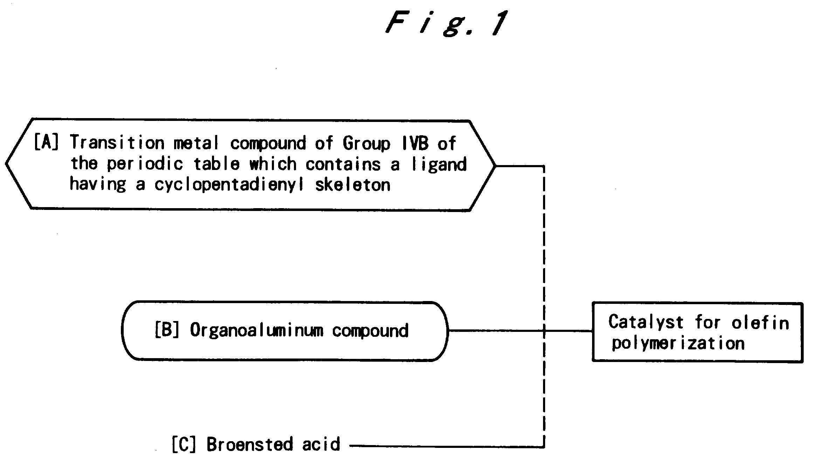

Fig. 1 is an explanatory view of a process for preparing an olefin polymerization catalyst according to the present invention.

The meaning of the term "polymerization" used herein is not limited to "homopolymerization" but includes "copolymerization". Also, the meaning of the term "polymer" used herein is not limited to "homopolymer" but includes "copolymer".

Fig. 1 shows the steps of a process for preparing the olefin polymerization catalyst according to the present invention.

The compound (A) of a transition metal in Group IVB of the periodic table which contains a ligand having a cyclopentadienyl skeleton (hereinafter sometimes referred to as "component (A)") can, for example, be a compound of formula (I):

MLₓ (I)

wherein M is a transition metal in Group IVB of the periodic table; L is a ligand coordinating to the transition metal; at least one L is a ligand having a cyclopentadienyl skeleton; L other than the ligand having a cyclopentadienyl skeleton is a hydrocarbon group of 1 to 12 carbon atoms, an alkoxy group, an aryloxy group, a trialkylsilyl group, SO3R (wherein R is a hydrocarbon group of 1 to 8 carbon atoms which may have a substituent such as halogen), a halogen atom or hydrogen atom; and x is the valence of the transition metal.

M is preferably zirconium, titanium or hafnium, most preferably zirconium.

Examples of the ligand having a cyclopentadienyl skeleton include a cyclopentadienyl group; an alkyl-substituted cyclopentadienyl group, such as a methylcyclopentadienyl group, a dimethylcyclopentadienyl group, a trimethylcyclopentadienyl group, a tetramethylcyclopentadienyl group, a pentamethylcyclopentadienyl group, an ethylcyclopentadienyl group, a methylethylcyclopentadienyl group, a propylcyclopentadienyl group, a methylpropylcyclopentadienyl group, a butylcyclopentadienyl group, a methylbutylcyclopentadienyl group and a hexylcyclopentadienyl group; an indenyl group; a 4,5,6,7-tetrahydroindenyl group; and a fluorenyl group. These groups may be substituted with, for example, a halogen atom or a trialkylsilyl group.

A particularly preferred ligand is an alkyl-substituted cyclopentadienyl group.

When the compound of formula (I) contains at least two groups each having a cyclopentadienyl skeleton, any two of them may be bonded to each other through an alkylene group such as ethylene and propylene, a substituted alkylene group such as isopropylidene and diphenylmethylene, a silylene group, or a substituted silylene group such as dimethylsilylene, diphenylsilylene and methylphenylsilylene.

Examples of the ligand L other than those having a cyclopentadienyl skeleton are as follows:

The hydrocarbon group having 1 to 12 carbon atoms includes, for example, an alkyl group, a cycloalkyl group, an aryl group and an aralkyl group.

Examples of the alkyl group include methyl, ethyl, propyl, isopropyl and butyl.

Examples of the cycloalkyl group include cyclopentyl and cyclohexyl.

Examples of the aryl group include phenyl and tolyl.

Examples of the aralkyl group include benzyl and neophyl.

The alkoxy group includes, for example, methoxy, ethoxy and butoxy.

The aryloxy group includes, for example, phenoxy.

The halogen includes, for example, fluorine, chlorine, bromine and iodine.

The ligand represented by SO₃R includes, for example, a p-toluenesulfonate group, a methanesulfonate group and a trifluoromethanesulfonate group.

In case that, for example, the transition metal has a valence of 4, the transition metal compound (A) containing a ligand having a cyclopentadienyl group is more concretely of formula (I'):

R¹ ₐR² _{b}R³ _{c}R⁴ _{d}M (I')

wherein M is the same transition metal as that in the formula (I); R¹ is a group (ligand) having a cyclopentadienyl skeleton; R², R³ and R⁴ are each a group (ligand) having a cyclopentadienyl skeleton, an alkyl group, a cycloalkyl group, an aryl group, an aralkyl group, an alkoxy group, an aryloxy group, a trialkylsilyl group, SO₃R, a halogen atom or hydrogen atom; a is an integer of not less than 1; and a + b + c + d = 4.

In the invention, the preferred transition metal compound is a metallocene compound of formula (I') wherein at least two of R¹, R², R³ and R⁴, for example R¹ and R², are groups (ligands) each having a cyclopentadienyl skeleton.

The at least two groups each having a cyclopentadienyl skeleton (for example R¹ and R²) may be bonded to each other through an alkylene group such as ethylene and propylene, a substituted alkylene group such as isopropylidene and diphenylmethylene, a silylene group, or a substituted silylene group such as dimethylsilylene, diphenylsilylene and methylphenylsilylene.

The other groups (for example R³ and R⁴) are each a group having a cyclopentadienyl group, an alkyl group, a cycloalkyl group, an aryl group, an aralkyl group, an alkoxy group, an aryloxy group, a trialkylsilyl group, SO₃R, a halogen atom or hydrogen atom.

Examples of the transition metal compound containing zirconium as M are:
Bis(indenyl)zirconium dichloride,
Bis(indenyl)zirconium dibromide,
Bis(indenyl)zirconiumbis(p-toluenesulfonate),
Bis(4,5,6,7-tetrahydroindenyl)zirconium dichloride,
Bis(fluorenyl)zirconium dichloride,
Ethylenebis(indenyl)zirconium dichloride,
Ethylenebis(indenyl)zirconium dibromide,
Ethylenebis(indenyl)dimethylzirconium,
Ethylenebis(indenyl)diphenylzirconium,
Ethylenebis(indenyl)methylzirconium monochloride,
Ethylenebis(indenyl)zirconiumbis(methanesulfonate),
Ethylenebis(indenyl)zirconiumbis(p-toluenesulfonate),
Ethylenebis(indenyl)zirconiumbis(trifluoromethanesulfonate),
Ethylenebis(4,5,6,7-tetrahydroindenyl)zirconium dichloride,
Isopropylidene(cyclopentadienyl-fluorenyl)zirconium dichloride,
Isopropylidene(cyclopentadienylmethylcyclopentadienyl)zirconium dichloride,
Dimethylsilylenebis(cyclopentadienyl)zirconium dichloride,
Dimethylsilylenebis(methylcyclopentadienyl)zirconium dichloride,
Dimethylsilylenebis(dimethylcyclopentadienyl)zirconium dichloride,
Dimethylsilylenebis(trimethylcyclopentadienyl)zirconiu m dichloride,
Dimethylsilylenebis(indenyl)zirconium dichloride,
Dimethylsilylenebis(indenyl)zirconiumbis(trifluromethanesulfonate),
Dimethylsilylenebis(4,5,6,7-tetrahydroindenyl)zirconium dichloride,
Dimethylsilylene(cyclopentadienyl-fluorenyl)zirconium dichloride,
Diphenylsilylenebis(indenyl)zirconium dichloride,
Methylphenylsilylenebis(indenyl)zirconium dichloride,
Bis(cyclopentadienyl)zirconium dichloride,
Bis(cyclopentadienyl)zirconium dibromide,
Bis(cyclopentadienyl)methylzirconium monochloride,
Bis (cyclopentadienyl) ethylzirconium monochloride,
Bis (cyclopentadienyl) cyclohexylzirconium monochloride,
Bis (cyclopentadienyl) phenylzirconium monochloride,
Bis (cyclopentadienyl) benzylzirconium monochloride,
Bis (cyclopentadienyl) zirconium monochloride monohydride,
Bis (cyclopentadienyl) methylzirconium monohydride,
Bis(cyclopentadienyl)dimethylzirconium,
Bis(cyclopentadienyl)diphenylzirconium,
Bis(cyclopentadienyl)dibenzylzirconium,
Bis (cyclopentadienyl) zirconium methoxychloride,
Bis(cyclopentadienyl)zirconium ethoxychloride,
Bis(cyclopentadienyl)zirconiumbis(methanesulfonate),
Bis(cyclopentadienyl)zirconiumbis(p-toluenesulfonate),
Bis(cyclopentadienyl)zirconiumbis(trifluoromethanesulfonate),
Bis(methylcyclopentadienyl)zirconium dichloride,
Bis(dimethylcyclopentadienyl)zirconium dichloride,
Bis(dimethylcyclopentadienyl)zirconium ethoxychloride,
Bis(dimethylcyclopentadienyl)zirconiumbis(trifluoromethanesulfonate),
Bis(ethylcyclopentadienyl)zirconium dichloride,
Bis(methylethylcyclopentadienyl)zirconium dichloride,
Bis(propylcyclopentadienyl)zirconium dichloride,
Bis(methylpropylcyclopentadienyl)zirconium dichloride,
Bis(butylcyclopentadienyl)zirconium dichloride,
Bis(methylbutylcyclopentadienyl)zirconium dichloride,
Bis(methylbutylcyclopentadienyl)zirconiumbis(methanesulfonate),
Bis(trimethylcyclopentadienyl)zirconium dichloride,
Bis(tetramethylcyclopentadienyl)zirconium dichloride,
Bis(pentamethylcyclopentadienyl)zirconium dichloride,
Bis(hexylcyclopentadienyl)zirconium dichloride, and
Bis(trimethylsilylcyclopentadienyl)zirconium dichloride.

In the above examples, the di-substituted cyclopentadienyl ring includes 1,2- and 1,3-substituted rings and the tri-substituted cyclopentadienyl ring includes 1,2,3- and 1,2,4-substituted rings. The alkyl group such as propyl and butyl includes isomers thereof such as n-, i-, sec- and tert-alkyl groups.

In the present invention, compounds in which titanium or hafnium is substituted for zirconium in the above-exemplified zirconium compounds may be used as the transition metal compound (A).

The above-mentioned compounds may be used alone or in combination. Before use, they may be diluted with a hydrocarbon or a halogenated hydrocarbon.

In the present invention, a preferred transition metal compound (A) is a zirconocene compound having zirconium as the central metal atom and containing at least two ligands each having a cyclopentadienyl skeleton.

In the present invention, employable as the organoaluminium compound (B) (hereinafter sometimes referred to as "component (B)") is, for example, an organoaluminium compound of formula (II) :

R^{a} ₙAlX₃₋ₙ (II)

wherein R^{a} is a hydrocarbon group of 1 to 12 carbon atoms, X is a halogen atom or hydrogen atom, and n is 1 to 3.

The hydrocarbon group of 1 to 12 carbon atoms includes, for example, an alkyl group, a cycloalkyl group and an aryl group. Examples of such groups include methyl, ethyl, n-propyl, isopropyl, isobutyl, pentyl, hexyl, octyl, cyclopentyl, cyclohexyl, phenyl and tolyl group. Examples of the organoaluminium compound are:
trialkylaluminiums such as trimethylaluminium, triethylaluminium, triisopropylaluminium, triisobutylaluminium, trioctylaluminium and tri-2-ethylhexylaluminium;
alkenylaluminiums such as isoprenylaluminium;
dialkylaluminium halides such as dimethylaluminium chloride, diethylaluminium chloride, diisopropylaluminium chloride, diisobutylaluminium chloride and dimethylaluminium bromide;
alkylaluminium sesquihalide such as methylaluminium sesquichloride, ethylaluminium sesquichloride, isopropylaluminium sesquichloride, butylaluminium sesquichloride and ethylaluminium sesquibromide;
alkylaluminium dihalides such as methylaluminium dichloride, ethylaluminium dichloride, isopropylaluminium dichloride and ethylaluminium dibromide; and
alkylaluminium hydrides such as diethylaluminium hydride and diisobutylaluminium hydride.

Also employable as the organoaluminium compound (B) is a compound of formula (II'):

R^{a} ₙAlY₃₋ₙ (II')

wherein R^{a} is the same as R^{a} in formula (II); n is 1 or 2; and Y is a -OR^{b}, -OSiR^{c}₃, -OAlR^{d}₂, -NRe₂, -SiRf₃ or -N(R^{g})AlR^{h}₂ group;
R^{b}, R^{c}, R^{d} and R^{h} are each an alkyl group such as methyl, ethyl, isopropyl, isobutyl, cyclohexyl and phenyl groups; R^{e} is hydrogen or a group such as methyl, ethyl, isopropyl, phenyl and trimethylsilyl groups; and R^{f} and R^{g} are each an alkyl group such as methyl and ethyl groups.

Examples of such organoaluminium compounds are:
(i) compounds of formula R^{a}ₙAl(OR^{b})₃₋ₙ such as dimethylaluminium methoxide, diethylaluminium ethoxide and diisobutylaluminium methoxide;
(ii) compounds of formula R^{a}ₙAl(OSiR^{c}₃)₃₋ₙ such as Et₂Al(OSiMe₃), (iso-Bu)₂Al(OSiMe₃) and (iso-Bu)₂Al(OSiEt₃);
(iii) compounds of formula R^{a}ₙAl(OAlR^{d}₂)₃₋ₙ such as Et₂AlOAlEt₂ and (iso-Bu)₂AlOAl(iso-Bu)₂;
(iv) compounds of formula R^{a}nAl(NR^{e}₂)₃₋ₙ such as Me₂AlNEt₂, Et₂AlNHMe, Me₂AlNHEt, Et₂AlN(Me₃Si)₂ and (iso-Bu)₂AlN(Me₃Si)₂;
(v) compounds of formula R^{a}ₙAl(SiR^{f}₃)₃₋ₙ such as (iso-Bu)₂AlSiMe₃; and
(vi) compounds of formula R^{a}ₙAl[N(R^{g})-AlR^{h}₂]₃₋ₙ such as Et₂AlN(Me)-AlEt₂ and (iso-Bu)₂AlN(Et)Al(iso-Bu)₂.

Further, also employable as the organoaluminium compound (B) is an alkyl complex compound composed of a metal of Group I of the periodic table and aluminium of formula:

M¹AlR^{j} ₄

wherein M¹ is an alkaline metal such as Li, Na and K, and R^{j} is a hydrocarbon group of 1 to 15 carbon atoms.

Examples of the alkyl complex compound include LiAl(C₂H₅)₄ and LiAl(C₇H₁₅)₄.

Of the organoaluminium compounds exemplified above, preferably used are trialkylaluminium, dialkylaluminium halide, dialkylaluminium hydride and dialkylaluminium alkoxide.

The organoaluminium compounds may be used alone or in combination.

The Brφnsted acid (C1) (hereinafter sometimes referred to as "component (C1)") used in the present invention is a cation-exchange resin or a heteropolyacid.

The cation-exchange resin is preferably a polystyrene type strongly acidic cation-exchange resin.

Examples of the polystyrene type cation-exchange resin include a polystyrene type strongly acidic cation-exchange resin such as Amberlyst 15 and Amberlyst 16 (both trade name) and an ultra-strongly acidic cation-exchange resin such as Nafion-H (trade name).

Commercially available solid acids may be used per se, but they may be pulverized before use because the particle diameter of the solid acid is preferably as small as possible. The particle diameter of the solid acid is preferably not more than 5 mm, more preferably not more than 2 mm.

Examples of the heteropolyacid include metallic salts or ammonium salts of molybdophosphoric acid, molybdotungstic acid, tungstophosphoric acid, molybdosilicic acid and tungstosilicic acid. Examples of metals for forming the metallic salts include potassium, rubidium, cesium and thallium. Of these, cesium is particularly preferred.

Examples of such compounds include cesium 12-molybdophosphate, potassium 12-molybdophosphate, rubidium 12-molybdophosphate, thallium 12-molybdophosphate and ammonium 12-molybdophosphate.

The olefin polymerization catalyst according to the present invention is formed by contacting the transition metal compound (A), the organoaluminium compound (B) and the Brφnsted acid (C1) with each other.

The contact of these catalyst components (A), (B) and (C1) may be carried out in any order, but it is preferred that the organoaluminium compound (B) is first fed to the polymerization system, and the transition metal compound (A) and the Brφnsted acid (C1) are then fed to the polymerization system to contact these three components with each other.

It is also possible that the Brφnsted acid (C1) and the organoaluminium compound (B) are first mixed to contact them with each other, followed by contacting with the transition metal compound (A).

When the cation-exchange material is used as the Brφnsted. acid (C1), the cation-exchange material may be washed, for example with the organoalumium compound, prior to the contact.

The temperature for contacting the components (A), (B) and (C1) is generally from -50 to 200 °C, preferably from -20 to 150 °C, and the period of time therefor is generally from 1 to 3,000 minutes, preferably from 5 to 1,200 minutes.

The olefin polymerization catalyst according to the present invention described hereinbefore may contain other components which are useful for olefin polymerization in addition to the above-described components.

Use of the olefin polymerization catalysts according to the present invention makes it possible to polymerize an olefin with a high polymerization activity.

In the process for olefin polymerization according to the present invention, an olefin is polymerized in the presence of the above-described olefin polymerization catalyst.

Examples of olefins employable in the polymerization includes α-olefins having 2 to 20 carbon atoms such as ethylene, propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene.

Also employable are, for example, cyclopentene, cycloheptene, norbornene, 5-methyl-2-norbornene, tetracyclododecene, 2-methyl-1,4,5,8-dimethano-1,2,3,4,4a,5,8,8a-octahydronaphthalene, styrene, vinylcyclohexane and diene.

Component (A) is used in the polymerization in an amount of usually 0.00001 to 10.0 mmol, preferably 0.0001 to 0.1 mmol, in terms of the transition metal atom contained in the transition metal compound (A), per 1 liter of the polymerization volume.

The organoaluminium compound (B) is used in an amount of usually 0.008 to 800 mmol, preferably 0.008 to 8 mmol, in terms of the aluminium atom contained in the organoaluminium compound (B), per 1 liter of the polymerization volume.

The cation-exchange material (C1) used in an amount of usually 0.0001 to 1,000 mmol equivalent, preferably 0.001 to 10 mmol equivalent, in terms of ion-exchange equivalent.

In the polymerization, the organoaluminium compound (B) is used in such an amount that the gram atom ratio (A1:transition metal) of the aluminium atom contained in the compound (B) to the transition metal contained in the transition metal compound (A) is in the range of usually 0.5:1 to 10,000:1, preferably 2:1 to 1,000:1. When the Brφnsted acid (C1) is an cation-exchange material, the cation-exchange material is used in such an amount that the ratio (eq:transition metal) of the ion exchange equivalent of the compound (C1) to the transition metal gram atom contained in the transition metal compound (A) is in the range of usually 0.5:1 to 1,000:1, preferably 1:1 to 100:1.

In the present invention, the polymerization may be a liquid phase polymerization such as suspension polymerization or a gas phase polymerization.

When the polymerization is a liquid phase polymerization, hydrocarbons may be used as a polymerization solvent. Examples of the hydrocarbons include:
aliphatic hydrocarbons such as propane, butane, pentane, hexane, heptane, octane, decane, dodecane and kerosene;
alicyclic hydrocarbon such as cyclopentane, cyclohexane and methylcyclopentane;
aromatic hydrocarbons such as benzene, toluene and xylene; and
halogenated hydrocarbons such as ethylene chloride, chlorobenzene and dichloromethane. These hydrocarbons may be used singly or in combination. Further, the olefin itself may be used as a solvent.

The temperature for the olefin polymerization is usually -50 to 150 °C, preferably 0 to 100 °C. The polymerization pressure is usually atmospheric pressure to 100 kg/cm², preferably atmospheric pressure to 50 kg/cm².

The polymerization may be carried out either batchwise, semi-continuously or continuously. Further, the polymerization may be carried out in two or more steps having reaction conditions different from each other.

The molecular weight of the olefin polymer obtained can be regulated by allowing hydrogen to exist in the polymerization system or by changing the polymerization temperature.

The aforementioned catalyst components may be prepolymerized with an olefin.

By the use of the olefin polymerization catalyst according to the present invention, an olefin can be polymerized with a high polymerization activity even if no organoaluminium oxy-compound is used. Further, the olefin polymerization catalyst according to the present invention is available at a low cost because an expensive organoaluminium oxy-compound is not used.

In the process for olefin polymerization according to the present invention, an olefin polymer can be prepared in a high yield and economically because an olefin is polymerized in the presence of the above-mentioned catalyst.

### EXAMPLES

The present invention will now be further described in the following Examples.

### Example 1

A glass polymerizer thoroughly purged with nitrogen was charged with 1,000 ml of purified toluene. The polymerizer was warmed to 75 °C, and ethylene was introduced into the polymerizer to sufficiently saturate the toluene with ethylene. Thereafter, to the polymerizer were successively added 0.75 mmol (in terms of aluminium atom) of triisobutylaluminium as a toluene solution, 0.005 mmol (in terms of zirconium atom) of ethylenebis(indenyl)zirconium dichloride as a toluene solution and 62.5 mg [0.05 mmol equivalent in terms of -SO₂OH group] of an ultra-strongly acidic ion-exchange resin (trade name: Nafion-H), to initiate polymerization. After 20 minutes, a small amount of isobutyl alcohol was added to terminate the polymerization. Then, all of the polymer was precipitated by the use of a large amount of methanol, followed by the addition of a small amount of hydrochloric acid. The resultant mixture was filtered with a glass filter to collect the polymer and the polymer was washed with methanol.

The polymer was dried at 80 °C for 10 hours under reduced pressure, to obtain 12.95 g of polyethylene.

The polyethylene thus obtained had an intrinsic viscosity [η], as measured in decalin at 135 °C, of 1.84 dl/g.

### Comparative Example 1

The procedure of Example 1 was repeated except for not using the ultra-strongly acidic ion-exchange resin (Nafion-H), to perform polymerization. As a result, 5.85 g of polyethylene was obtained.

The polyethylene thus obtained had an intrinsic viscosity [η] of 1.71 dl/g.

### Example 2

The procedure of Example 1 was repeated except for using 11.3 mg [0.05 mmol equivalent in terms of -SO₂OH group] of a cation-exchange resin (trade name: Amberlist 15E) in place of the ultra-strongly acidic ion-exchange resin (Nafion-H) and using 0.4 mmol (in terms of aluminium atom) of the toluene solution of triisobutylaluminium, to perform polymerization. 11.9 g of polyethylene was obtained.

### Example 3

A glass polymerizer thoroughly purged with nitrogen was charged with 1,000 ml of purified toluene. The polymerizer was warmed to 75 °C, and ethylene was introduced into the polymerizer to sufficiently saturate the toluene with ethylene.

Separately, to a 20 ml Schrenk bottle were added 22.5 mg [0.1 mmol equivalent in terms of -SO₂OH group] of a cation-exchange resin (trade name: Amberlist 15E) and 5.0 ml of toluene, and then further added 0.2 mmol (in terms of aluminum atom) of a toluene solution of triisobutylaluminium. The resultant mixture was stirred at room temperature for 10 minutes.

Then, to the above polymerizer were successively added 0.2 mmol (in terms of aluminum atom) of triisobutylaluminium and 0.005 mmol (in terms of zirconium atom) of ethylenebis(indenyl)zirconium dichloride, and all the reaction solution obtained in the Schrenk bottle was further added to initiate polymerization. After 20 minutes, a small amount of isobutyl alcohol was added to terminate the polymerization. Then, a post treatment was carried out in the same manner as described in Example 1 to obtain 16.0 g of polyethylene.

### Example 4

The procedure of Example 3 was repeated except for using 27.3 mg [0.12 mmol equivalent in terms of -SO₂OH group] of the cation-exchange resin (trade name: Amberlist 15E) having been ground in a mortar, to perform polymerization. 22.05 g of polyethylene was obtained.

### Example 5

The procedure of Example 3 was repeated except for using tridecylaluminium in place of the triisobutylaluminium and varying the polymerization period to 45 minutes, to perform polymerization. 16.48 g of polyethylene was obtained.

### Comparative Example 2

The procedure of Example 4 was repeated except for not using the cation-exchange resin to perform polymerization. 6.30 g of polyethylene was obtained.

### Example 6

The procedure of Example 1 was repeated except for varying the amount of the ethylenebis(indenyl)zirconium dichloride to 0.002 mmol and using 0.02 mmol (in terms of phosphorus atom) of cesium 12-molybdophosphate in place of the ultra-strongly acidic cation-exchange resin (Nafion-H), to perform polymerization. 5.88 g of polyethylene was obtained.

## Claims

1. An olefin polymerization catalyst comprising:
(A) a compound of a transition metal in Group IVB of the periodic table, which contains a ligand having a cyclopentadienyl skeleton;
(B) an organoaluminium compound; and
(C) a solid Broensted acid selected from a cation-exchange resin and a heteropolyacid.

2. A catalyst according to claim 1, wherein the cation-exchange resin is a polystyrene type strongly acidic cation-exchange resin or an ultra-strongly acidic cation-exchange resin.

3. A catalyst according to claim 1, wherein the heteropolyacid is a metallic or ammonium salt of molybdophosphoric acid, molybdotungstic acid, tungstophosphoric acid, molybdosilicic acid or tungstosilicic acid.

4. A catalyst according to claim 3, wherein the metallic salt is a potassium, rubidium, cesium or thallium salt.

5. A process for olefin polymerization comprising polymerizing an olefin in the presence of an olefin polymerization catalyst as defined in any one of claims 1 to 4.

## Patentansprüche

1. Katalysator für die Olefinpolymerisierung aus:
(A) einer Verbindung eines Übergangsmetalls in der Gruppe IVB des periodischen Systems, das einen Liganden mit einem Cyclopentadienylskelett enthält,
(B) einer Organoaluminiumverbindung und
(C) einer festen Broenstedsäure, ausgewählt aus einem Kationenaustauscherharz und einer Heteropolysäure.

2. Katalysator nach Anspruch 1, worin das Kationenaustauscherharz ein stark saures Kationenaustauscherharz vom Polystyrentyp oder ein ultrastark saures Kationenaustauscherharz ist.

3. Katalysator nach Anspruch 1, worin die Heteropolysäure ein metallisches oder Ammonium-Salz der Molybdophosphorsäure, Molybdowolframsäure, Wolframphosphorsäure, Molybdokieselsäure oder Wolframkieselsäure ist.

4. Katalysator nach Anspruch 3, worin das metallische Salz ein Kalium-, Rubidium-, Cäsium- oder Kalium-Salz ist.

5. Verfahren zur Olefinpolymerisierung, umfassend das Polymerisieren eines Olefins in Gegenwart eines Katalysators für die Olefinpolymerisierung, wie in einem der Ansprüche 1 bis 4 definiert.

## Revendications

1. Catalyseur de polymérisation d'oléfines comprenant :
(A) un composé d'un métal de transition du Groupe IVB du Tableau Périodique, qui contient un ligand présentant un squelette cyclopentadiényle,
(B) un composé organoaluminique, et
(C) un acide solide de Brönsted choisi parmi une résine échangeuse de cations et un hétéropolyacide

2. Catalyseur conforme à la revendication 1, dans lequel la résine échangeuse de cations est une résine échangeuse de cations fortement acide de type polystyrène ou une résine échangeuse de cations très fortement acide.

3. Catalyseur conforme à la revendication 1, dans lequel l'hétéropolyacide est un sel d'ammonium ou métallique de l'acide molybdophosphorique, de l'acide molybdotungstique, de l'acide tungstophosphorique, de l'acide molybdosilicique ou de l'acide tungstosilicique.

4. Catalyseur conforme à la revendication 3, dans lequel le sel métallique est un sel de potassium, de rubidium, de césium ou de thallium.

5. Procédé de polymérisation d'oléfines comprenant la polymérisation d'une oléfine en présence d'un catalyseur de polymérisation d'oléfines conforme à l'une quelconque des revendications 1 à 4.
